# EUROPÄISCHE PATENTSCHRIFT

(11) **EP 1 234 275 B1**
(45) Veröffentlichungstag und Bekanntmachung des Hinweises auf die Patenterteilung: **31.03.2004**
(21) Anmeldenummer: 00989819.8
(22) Anmeldetag: 01.12.2000
(51) Int. Cl.: G06K 19/00

(54) **CHIPKARTENMODUL MIT ANISOTROP LEITFÄHIGER TRÄGERFOLIE**
CHIP CARD MODULE WITH ANISOTROPICALLY CONDUCTING SUPPORT FILMS
MODULE DE CARTE A PUCE COMPRENANT UN FILM SUPPORT A CONDUCTION ANISOTROPIQUE

(30) Priorität: 02.12.1999 EP 99124141
(43) Veröffentlichungstag der Anmeldung: 28.08.2002
(73) Patentinhaber: Infineon Technologies AG, 81669 München (DE)
(72) Erfinder: HEINEMANN, Erik, 93049 Regensburg (DE); PUESCHNER, Frank, 93309 Kehlheim (DE); HOUDEAU, Detlef, 84085 Langquaid (DE)
(74) Vertreter: Epping Hermann & Fischer
(86) Internationale Anmeldenummer: PCT/DE2000/004282
(87) Internationale Veröffentlichungsnummer: WO 2001/041054

(56) Entgegenhaltungen:
- EP-A- 0 766 197
- EP-A- 0 908 844
- FR-A- 2 761 497
- US-A- 4 719 140
- US-A- 5 936 847

## Beschreibung

Die Erfindung bezieht sich auf ein Chipkartenmodul mit einer anisotrop leitfähigen Trägerfolie.
Solche Chipkartenmodule werden bei der Produktion von Chipkarten als fertigungstechnisch unabhängige Zwischenerzeugnisse hergestellt, wie aus DE 196 32 113 bekannt ist.

Ein übliches Chipkartenmodul für Telefonkarten wird beispielsweise in US-A-4 719 140 oder in US-A-5 936 847 beschrieben und besteht aus einem Träger und zumindest einer Halbleiterschaltung, dem sogenanntem Halbleiterchip, der auf dem Träger angeordnet ist. Weiterhin weist der Träger Kontaktflächen auf. Die Kontaktflächen sind in ihrer Größe nach dem ISO-Standard genormt.
Oftmals sind zudem Leiterbahnen auf einer Seite des Trägers vorgesehen, die als Zuführungen zu den Kontaktflächen dienen.
Da sich der Halbleiterchip und die Kontaktflächen auf verschiedenen Seiten des Trägers befinden, sind ferner Durchkontaktierungen nötig, die eine elektrische Verbindung von einer Seite des Trägers zur anderen ermöglichen.
Die elektrische Verbindung seitens des Halbleiterchips erfolgt über Anschlußpunkte, sogenannte Pads, die sich an der Oberfläche des Halbleiterchips befinden.

Ein heute übliches Chipkartenmodul weist einen Träger aus Folienmaterial auf, das einseitig mit einem Metallfilm versehen ist, aus dem durch Strukturierung die Kontaktflächen ausgebildet sind.

Zur mechanischen Befestigung des Halbleiterchips auf dem Träger und zur elektrischen Verbindung des Halbleiterchips mit den Kontaktflächen stehen mehrere Verfahren zur Verfügung:
Bei der zuvor genannten Telefonkarte wird in der Regel die "Wire Bond" Technik angewandt. Dabei wird der Halbleiterchip so auf dem Träger befestigt, daß die Anschlußpunkte von der Trägeroberfläche abgewandt sind. Diese Anschlußpunkte werden dann mittels dünner Drähte mit den Kontaktflächen elektrisch leitend verbunden.
Bei der "Tape Automated Bonding" Technik, kurz TAB-Technik, wird der Halbleiterchip direkt mit dem auf dem Träger vorgesehenen Leiterbahnsystem verlötet. Dies erfordert zuvor eine geeignete Metallisierung der Anschlußpunkte. Durch die Verlötung wird der Halbleiterchip auch mechanisch fixiert, so daß eine eigene Befestigung des Chips entfällt.

Weiterhin ist aus JP 09148378 A weiter bekannt, eine Verbindung zwischen Halbleiterchip und Leiterbahnsystem mittels einer anisotrop leitenden Folie, einer sogenannten AC-Folie, zu realisieren. Die Folie ist dabei zwischen Träger und Halbleiterchip angeordnet. Diese AC-Folie ist gemäß der beschriebenen Ausführung eine Klebefolie, mit der der Halbleiterchip mechanisch auf dem Träger befestigt ist.

Der Nachteil dieser Techniken besteht in den vergleichsweise hohen Kosten, die einerseits durch das Trägermaterial selbst verursacht werden, andererseits durch die Prozeßschritte, die für die elektrische Verbindung nötig sind.
Insbesondere bei der Verbindung des Halbleiterchips mit dem Träger mittels einer AC-Folie fallen sowohl Kosten für einen Träger mit Leiterbahnsystem als auch für die AC-Folie an.

Chipkarten dürfen bei vielen Anwendungen keine hohen Kosten verursachen, da sie, wie bei der Telefonkarte, ein Wegwerfprodukt mit stark überschaubarer Lebensdauer darstellen.

Aufgabe der vorliegenden Erfindung ist es, mit möglichst geringem Aufwand ein kostengünstiges Chipkartenmodul zu realisieren.

Diese Aufgabe wird durch ein Chipkartenmodul nach Anspruch 1 gelöst.

Erfindungsgemäß wird dabei als Trägerfolie eine AC-Folie verwendet, auf deren einer Seite die Kontaktflächen direkt aufgebracht sind und auf deren anderer Seite der Halbleiterchip befestigt wird. Diese AC-Folie dient sowohl als mechanischer Träger des Chipkartenmoduls als auch als elektrisches Verbindungselement zwischen Halbleiterchip und Kontaktflächen. Somit entfallen der separate Träger und Prozeßschritte zur elektrischen Verbindung und Durchkontaktierung, so daß erfindungsgemäße Chipkartenmodule deutlich kostengünstiger hergestellt werden können.

Bei einer vorteilhaften Ausgestaltung der Erfindung werden die Kontaktflächen direkt auf die AC-Folie aufgedampft. Diese Methode zur Herstellung der Kontaktflächen ist besonders kostengünstig gegenüber einem mit durchgehendem Metallaminat versehenen Träger, auf dem Kontaktflächen und Leiterbahnen durch Strukturierung des Metallaminats gebildet sind.

Bei einer weiteren bevorzugten Ausführung der Erfindung ist vorgesehen, daß die AC-Folie eine Heißklebefolie ist. Dies bringt den Vorteil mit sich, daß diese Folie gleichzeitig die mechanische Befestigung des Halbleiterchips sicherstellt, so daß zusätzliche Befestigungsschritte entfallen.

Weiterhin ist es vorteilhaft, die Flächen der Anschlußpunkte so vergrößert zu dimensionieren, daß sie nahezu die gesamte Fläche der der AC-Folie zugewandten Seite des Halbleiterchips bedecken. Dies bewirkt eine besonders zuverlässige Kontaktgabe zwischen Halbleiterchip und AC-Folie, so daß sich die Anforderung an die AC-Folie hinsichtlich ihrer Leitfähigkeit und damit die Herstellungskosten für die AC-Folie reduzieren und die Fertigungsausbeute der Chipmodule erhöht.

Ein weiterer Vorteil der Erfindung besteht in der Möglichkeit, sehr dünnes, hinsichtlich einer Biegebeanspruchung sehr flexibles Modul herzustellen.

Nachfolgend wird die Erfindung anhand eines Ausführungsbeispiels unter Bezugnahme auf die Zeichnung näher erläutert.

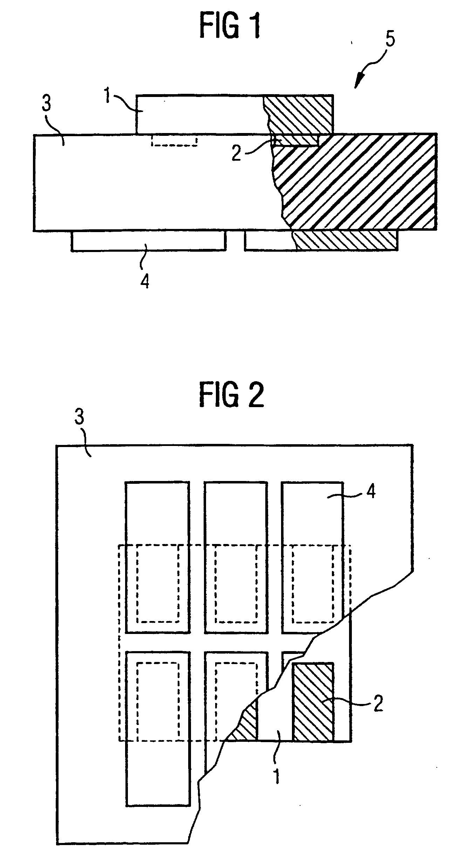

Es zeigen:
Fig. 1 eine schematische Seitenansicht des erfindungsgemäßen Chipkartenmoduls im Teilschnitt und
Fig. 2 eine schematische Aufsicht des Chipkartenmoduls auf die Seite der Kontaktflächen im Teilschnitt.
Die schematische Darstellung nach Fig. 1 zeigt ein Chipkartenmodul 5 in der Seitenansicht. Dieses enthält einen Träger 3, der aus einem folienartigen Material besteht. Für dieses Material ist eine anisotrop leitende Heißklebefolie gewählt, deren Richtung maximaler Leitfähigkeit senkrecht auf der Folienebene steht.

Auf einer Seite dieses Trägers 3 ist ein Halbleiterchip 1 aufgebracht, der auf einer Seitenfläche Anschlußpunkte 2 aufweist. Dieser Halbleiterchip 1 ist so angeordnet, daß dessen Anschlußpunkte 2 in direktem Kontakt mit dem Träger 3 stehen.

Zur mechanischen Befestigung ist der Halbleiterchip 1 mit dem Träger 3 verklebt, wobei die Heißklebefolie aufgrund ihrer Klebeeigenschaft selbst als Klebemittel wirkt.

Auf der anderen Seite des Trägers 3 sind metallische ISO-Kontaktflächen 4 aufgedampft. Die elektrische Verbindung zwischen den ISO-Kontaktflächen 4 und den Anschlußpunkten 2 des Halbleiterchips 1 wird durch den Träger 3 selbst hergestellt. Die Richtung dieser Verbindung verläuft dabei immer senkrecht zur Folienebene, während parallel zur Folienebene der Träger 3 einen Isolator darstellt.

Fig. 2 zeigt eine besonders vorteilhafte Ausführung der Erfindung. Hierbei sind die Anschlußpunkte 2 mit vergrößerter Querschnittsfläche ausgeführt, so daß sie einen wesentlichen Teil der Chipoberfläche bedecken. Aufgrund der großen Querschnittsfläche wird eine besonders gute Kontaktgabe zwischen den Anschlußpunkten 2 und dem Träger 3 gewährleistet.
Weiterhin werden durch die vergrößerten Kontaktflächen die Anforderungen an die Positioniergenauigkeit beim Aufbringen des Halbleiterchips 1 auf den Träger 3 vorteilhaft gesenkt.

## Patentansprüche

1. Chipkartenmodul mit einer Trägerfolie (3) und mindestens einem Halbleiterchip (2), der Anschlußpunkte (2) aufweist, und mit Kontaktflächen (4), die direkt auf einer Oberfläche der Trägerfolie (3) aufgetragen sind, wobei die Trägerfolie (3) so zwischen dem Halbleiterchip (1) und den Kontaktflächen (4) angeordnet ist, daß sie durch direkten Kontakt die Anschlußpunkte (2) des Halbleiterchips (1) mit den Kontaktflächen (4) verbindet, **dadurch gekennzeichnet, daß** die Trägerfolie aus anisotrop leitendem Material besteht.

2. Chipkartenmodul nach Anspruch 1, bei dem die Kontaktflächen (4) auf die Oberfläche der Trägerfolie (3) aufgedampft sind.

3. Chipkartenmodul nach Anspruch 1 oder 2, bei dem als Trägerfolie (3) eine Heißklebefolie verwendet wird.

4. Chipkartenmodul nach einem der Ansprüche 1, 2 oder 3, bei dem die Fläche der Anschlußpunkte (2) so vergrößert ist, daß die Anschlußpunkte (2) in ihrer Gesamtheit den überwiegenden Teil einer Hauptoberfläche des Halbleiterchips (1) bedecken.

## Claims

1. Smart-card module having a substrate film (3) and at least one semiconductor chip (2) [sic], which has connection points (2), and having contact areas (4), which are applied directly to a surface of the substrate film (3), the substrate film (3) being arranged between the semiconductor chip (1) and the contact areas (4) in such a way that it connects the connection points (2) of the semiconductor (1) to the contact areas (4) by means of direct contact, **characterized in that** the substrate film consists of anisotropically conductive material.

2. Smart-card module according to Claim 1, in which the contact areas (4) are vapour-deposited onto the surface of the substrate film (3).

3. Smart-card module according to Claim 1 or 2, in which the substrate film (3) used is a hot-melt adhesive film.

4. Smart-card module according to one of Claims 1, 2 or 3, in which the area of the connection points (2) is enlarged in such a way that the connection points (2) in their entirety cover the predominant part of a main surface of the semiconductor chip (1).

## Revendications

1. Module de carte à puce comprenant une feuille (3) support et au moins une puce (2) à semi-conducteur qui a des points (2) de connexion, et comprenant des faces (4) de contact qui sont déposées directement sur une surface de la feuille (3) support, la feuille (3) support étant interposée entre la puce (1) à semi-conducteur et les faces (4) de contact, de façon à ce qu'elle relie par contact direct les points (2) de connexion de la puce (1) à semi-conducteur aux faces (4) de contact, **caractérisé en ce que** la feuille support est en un matériau conducteur de façon anisotrope.

2. Module de carte à puce suivant la revendication 1, dans lequel les faces (4) de contact sont déposées en phase vapeur à la surface de la feuille (3) support.

3. Module de carte à puce suivant la revendication 1 ou 2, dans lequel on utilise comme feuille (3) support un ruban adhésif à chaud.

4. Module de carte à puce suivant l'une des revendications 1, 2 ou 3, dans lequel la face des points (2) de connexion est si agrandie que les points (2) de connexion recouvrent dans sa totalité la partie prépondérante d'une surface principale de la puce (1) à semi-conducteur.
